(19) Europäisches Patentamt
European Patent Office
Office européen des brevets

(11) **EP 0 730 163 A2**

(12) **EUROPÄISCHE PATENTANMELDUNG**

(43) Veröffentlichungstag:
04.09.1996 Patentblatt 1996/36

(51) Int. Cl.[6]: **G01R 33/12**

(21) Anmeldenummer: 96101942.9

(22) Anmeldetag: 10.02.1996

(84) Benannte Vertragsstaaten:
**AT CH DE FR GB IT LI**

(30) Priorität: **03.03.1995 DE 19507409**

(71) Anmelder: **GSF - Forschungszentrum für Umwelt und Gesundheit GmbH**
**D-85764 Oberschleissheim (DE)**

(72) Erfinder:
- **Möller, Winfried, Dr.**
**D-36399 Freiensteinau (DE)**
- **Stahlhofen, Willi, Dr.**
**D-61352 Bad Homburg (DE)**
- **Barth, Winfried, Dr.**
**D-60529 Frankfurt (DE)**

(54) **Vorrichtung zur Bestimmung der magnetischen Eigenschaften von Mikroteilchen**

(57) Die Erfindung betrifft eine Vorrichtung zur Bestimmung der magnetischen Eigenschaften von Mikroteilchen, welche in einem Trägermedium durch die Vorrichtung geführt werden.

Aufgabe der Erfindung ist es, die Vorrichtung so auszugestalten, daß sie direkt in den Herstellungsprozeß der Teilchen integriert werden kann und kontinuierlich arbeitet.

Gelöst wird diese Aufgabe durch einen magnetischen Teilchenabscheider bestehend aus zwei spiegelsymmetrisch zueinander angeordneten gleichen Magneten, einen Teilchenzähler zur Erfassung der Teilchenkonzentration im Trägermedium, einen Durchflußmesser und eine vom Durchflußmesser regelbare Pumpe.

Fig. 2

## Beschreibung

Die Erfindung betrifft eine Vorrichtung zur Bestimmung der magnetischen Eigenschaften von Mikroteilchen, welche in einem Trägermedium durch die Vorrichtung geführt werden.

In der Grundlagenforschung ist es wichtig, bei magnetischen Einkristallen die Einflüsse von Fremdstoffen auf die magnetischen Eigenschaften zu bestimmen.

Bei der Fertigung von magnetischen Datenspeichermedien ist es wichtig, die Qualität der Ferritteilchen zu kontrollieren, um den Qualitätsstandrad zu gewährleisten.

Bisher ist es üblich, Proben mit aufwendigen Magnetometern zu charakterisieren, wobei die Proben für den Meßvorgang speziell präpariert werden müssen. Eine kontinuierliche Überwachung (on line) ist damit nicht möglich.

Aus der US 4,692,698 ist eine Vorrichtung bekannt, bei der magnetisierbare Teilchen mit Hilfe eines Magnetfeldes an ferromagnetische Fasern gebunden werden und deren Magnetisierbarkeit dann mit einem Feldsensor gemessen wird. Die magnetischen Eigenschaften von Einzelteilchen können so nicht erfaßt werden.

Desweiteren ist aus der DD 301 563 A7 eine Vorrichtung zur Trennung von magnetischen Teilchen in Suspensionen bekannt, bei der die Trennung der Teilchen durch ein homogenes Magnetfeld erfolgt.

Aufgabe der Erfindung ist es, eine Vorrichtung der eingangs genannten Art so auszugestalten, daß sie direkt in den Herstellungsprozeß der Teilchen integriert werden kann und kontinuierlich arbeitet.

Gelöst wird diese Aufgabe durch die Merkmale des Patentanspruchs 1. Die Unteransprüche beschreiben vorteilhafte Ausgestaltungen der Erfindung.

Ein besonderer Vorteil der Vorrichtung besteht darin, daß die Messung der magnetischen Momente auf eine reine Teilchenzählung zurückgeführt wird.

Die Erfindung wird im folgenden anhand eines Ausführungsbeispiels mit Hilfe der Figuren näher erläutert.

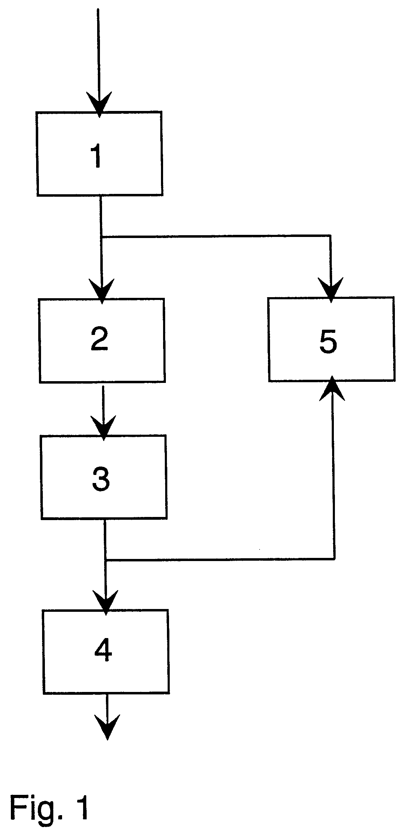

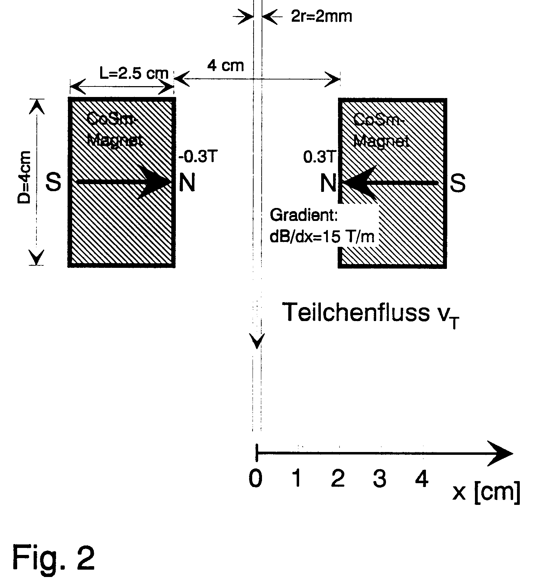

Dabei zeigt die Fig 1 ein Blockdiagramm einer möglichen Anordnung und die Fig 2 das Beispiel eines Teilchenabscheiders.

Das Gerät dient dazu, die ferromagnetischen Eigenschaften, wie das magnetische Moment bzw. die Magnetisierung von Mikrometerteilchen zu messen. Die Teilchen können luftgetragen oder in einer Flüssigkeit suspendiert sein.

In Fig. 1 zeigen die Pfeile den Fluß des Trägermediums durch die Meßanordnung. Die Quelle (hier nicht dargestellt) für die Magnetteilchen kann dabei entweder ein Aerosolgenerator oder Teile des Produktstromes einer Produktionsanlage für magnetisierbare Mikroteilchen sein. Die Mikroteilchen haben einen Durchmesser zwischen 0.1 µm bis 10 µm und sind monodispers. Für polydisperse Gemische ist es wichtig, jeweils nur eine Größenfraktion, z. B. mittels vorgeschaltetem Impaktor, zu separieren. Der teilchenbeladene Trägermedium fließt zunächst in die oben dargestellte Magnetisierungseinheit 1. Dort werden die Teilchen durch ein Magnetfeld geeigneter Stärke magnetisiert, je nach Aufgabenstellung bis zur Sättigung. Dadurch verbleibt beim Austritt aus der Magnetisierungseinheit 1 ein remanenter magnetischer Dipol in jedem Teilchen.

Das Trägermedium mit den magnetisierten Teilchen durchfließt dann den Teilchenabscheider 2, der unten genauer beschrieben wird. Aus der Abscheiderate kann das magnetische Moment der Teilchen bestimmt werden.

Danach wird das Trägermedium durch den Flußmesser 3 und dann durch die Pumpe 4 geführt. Über die Pumpe 4 mit Hilfe des Durchflußmdessers 3 kann ein vorgegebener Fluß des Trägermediums durch das gesamte System eingestellt werden.

Die Abscheiderate des Teilchenabscheiders 2 wird mit Hilfe des Teilchenzählers 5 ermittelt, indem die Teilchenkonzentration im Trägermedium vor und nach dem Teilchenabscheider bestimmt wird. Eine zweite Methode zur Bestimmung der Abscheiderate im Teilchenabscheider ergibt sich durch Messung der Teilchenkonzentrationen bei aktivertem und bei nichtaktiviertem Teilchenabscheider. Der Teilchenabscheider kann durch Entfernung der Magnete bzw. durch Abschaltung des Feldes inaktiviert werden. Die Teilchenzählung im Trägermedium kann entweder direkt photometrisch oder elektrostatisch erfolgen.

Fig. 2 zeigt zwei links und rechts von einer Röhre spiegelsymmetrisch angeordnete CoSm-Permanentmagnete, wobei sich gleiche Pole gegenüberstehen. Dadurch wird zwischen den Polen ein nahezu homogener Feldgradient erzeugt, wobei die Spiegelebene selbst feldfrei ist. Durch den Feldgradienten wird eine Kraft in Richtung auf die Magnete bewirkt, die abhängig ist von der Stärke des magnetischen Dipols des Teilchens. Die Abscheiderate wird bestimmt von der auf den Dipol in Richtung der Magnete wirkenden Kraft und der Aufenthaltsdauer im Bereich der Magnete. Die Aufenthaltsdauer wird dabei über die Pumpe 4 und den Flußmesser 3 eingestellt. Fließt das Trägermedium durch die feldfreie Spiegelebene, wirkt nur der aus der Magnetisierungseinheit 1 verbleibene remanente Dipol der Teilchen im Feldgradienten.

Beim Fluß des mit Teilchen beladenen Trägermediums außerhalb der Spiegelebene passieren die Teilchen zusätzlich ein mit zunehmendem Abstand zur Spiegelebene zunehmendes Magnetfeld.

Dieses Magnetfeld bewirkt eine Verstärkung des magnetischen Dipols, die eine Erhöhung der Abscheiderate zur Folge hat. Der magnetische Dipol ist dadurch zusätzlich bei einer durch den Abstand zur Spiegelebene vorgegebenen Feldstärke (0 bis 0.3 T) bestimmbar.

Im folgenden werden Aufbau und Funktionsweise der Einheiten quantifiziert.

Dabei bedeuten die verwendeten magnetischen Größen [Einheiten]:

m     magnetisches Moment [$Am^2$]

H     magnetische Feldstärke [A/m]

B     magnetische Flußdichte $B = \mu\mu_0 H$, $B=\mu_0 H$ im Vakuum

$\mu_0$     Permeabilität des Vakuums $\mu_0 = 4\pi \cdot 10^{-6}$ Vs/Am

$\mu$     magnetische Permeabilität

n     Viskosität des Trägermediums [Pa·s]

M     Masse des Teilchens [kg]

$S_m$     spezifische Magnetisierung [$Am^2$/kg]

$a_B$     Beschleunigung [$m/s^2$]

$V_B$     Ablenkgeschwindigkeit [m/s]

d     Teilchendurchmesser [m]

$\rho$     $\rho_T$ - $\rho_M$ (Teilchendichte- Mediumdichte) [$u_g/m_3$].

Die Teilchen werden von einem beliebigen Aerosolgenerator (z. B. einem Spinning Top Aerosol Generator) erzeugt und befinden sich dann im luftgetragenen Zustand. Es wurden Teilchen mit einer Größe im Mikrometerbereich untersucht. In dem Gerät werden die luftgetragenen ferromagnetischen Teilchen mit einer bestimmten Geschwindigkeit bzw. mit bestimmtem Fluß durch ein magnetisches Kraftfeld geführt.

Das Aerosol fließt, wie in Fig. 2 dargestellt, in einem Röhrchen mit 2 mm Innendurchmesser. Das Kraftfeld wirkt senkrecht zum Fluß des Aerosols. Im Kraftfeld kommt es zu einer Bewegung senkrecht zur Flußrichtung. Die Teilchen treffen dabei auf die Wand des Röhrchens auf und können somit nicht am Ausgang nachgewiesen werden. Es wird die Teilchenkonzentration vor und hinter dem magnetischen Kraftfeld mit einem Laseraerosolspektrometer gemessen. Die Abscheidecharakteristik ist dabei abhängig von der Magnetisierung des Teilchens (siehe Berechnungen) und der Aufenthaltsdauer der Teilchen im Kraftfeld. Diese kann über den Fluß des Aerosol im Röhrchen variiert werden. Zur einfachen Handhabung wird der Fluß bzw. die Aufenthaltsdauer bestimmt, bei der 50 % der Teilchen abgeschieden werden.

Eine Kraftwirkung F auf magnetische Teilchen mit dem Dipolmoment m ergibt sich nur in einem magnetischen Gradientenfeld, also in einer räumlichen Veränderung des Magnetfeldes (dB/dx) nach:

$$F = m\frac{dB}{dx}$$

Der Feldgradient wird mit zwei koaxial angeordneten CoSm-Permanentmagneten erzeugt, wobei sich gleiche Pole im Abstand 2D gegenüberstehen. Jeder der Permanentmagnete hat zylindrische Form mit 4 cm Durchmesser und 2,5 cm Länge. Da sich gleiche Pole gegenüberstehen, ergibt sich eine Abstoßung mit einer Feldverzerrung, bei der das Feld des einen Magneten durch den des anderen verdrängt wird. In der Teilungsebene zwischen beiden Magneten wird das Gesamtfeld Null, am linken Pol ergibt sich die negative Polstärke, am rechten Pol die positive Polstärke. Der Feldgradient ist nahezu konstant und beträgt näherungsweise Polstärke/D:

$$\frac{dB}{dx} = B_x = \frac{B_{Pol}}{D}$$

Die Anordnung wurde gewählt zu: D=2cm, $B_{Pol} \approx 0.35\,T$, so daß

$$\frac{dB}{dx} \approx 17\,\frac{T}{m}$$

Da der Feldgradient nahezu konstant ist, wirkt während des Durchfluges der Teilchen durch das Kraftfeld eine konstante Kraft, woraus eine konstante Beschleunigung $a_B$ der Teilchen mit der Masse M resultiert. Es gilt:

$$m\frac{dB}{dx} \approx M \cdot a_B,$$

so daß

$$a_B = \frac{m}{M}\frac{dB}{dx} \approx S_m\,\frac{dB}{dx}$$

$S_m$ ist das spezifische magnetische Moment [$Am^2$/kg] des Teilchens.

Eine konstante Kraftwirkung auf ein Teilchen mit dem geometrischen Durchmesser d in einem Gas mit der Viskosität n [$=1.82 \cdot 10^{-5}$ Pa*s für Luft] steht im Gleichgewicht mit der Stokes'schen Reibungskraft und führt zu einer konstanten Geschwindigkeit $v_B$ nach:

$$v_B = C \cdot a_B \cdot \tau, \tau = \frac{\rho d^2}{18\eta}8$$

C ist die Cunningham-Korrektur, die für Teilchen größer als 1.5 µm auf 1 gesetzt werden kann und nur für kleinere Teilchen größer 1 wird und eine zunehmende Diskontinuität des Gases beschreibt. Die Größe $\tau$ beschreibt die charakteristische Einschwingzeit, die vergeht, bis das System bei einer Kraftveränderung wieder die neue konstante Geschwindigkeit einnimmt, $\rho$ ist die mit dem Auftrieb korrigierte Dichte.

Um 50 % der Teilchen beim Durchgang durch das Kraftfeld abzuscheiden, müssen die Teilchen im Mittel eine horizontale Distanz von der Länge des Röhrchenradius r zurücklegen. Diese Strecke muß während der Aufenthaltszeit T im Kraftfeld durchquert werden. Daraus ergibt sich $v_{50} = r/T$. Die Aufenthaltsdauer im Kraftfeld mit der Länge L kann mit der Teilchengeschwindigkeit im Röhrchen festgelegt werden:

$v_T = L/T$. Die Teilchengeschwindigkeit beträgt

$v_T$ = Teilchenfluß/Röhrchen querschnitt = $V_t/A$

($V_t = dV/dt$ ; $A = \pi r^2$). Damit ergibt sich die Aufenthalts-dauer zu:

$$T = \frac{L \cdot A}{V_t}$$

Die Horizontalgeschwindigkeit, bei der 50 % Abscheidung erfolgt, kann nun bestimmt werden zu:

$$v_{50} \frac{r \cdot V_t}{L \cdot A}$$

Diese Geschwindigkeit ist gleichzusetzen mit der Geschwindigkeit der Teilchen im magnetischen Kraftfeld: $v_{50} = v_B$ :

$$Ca_B \tau = \frac{r \cdot V_{t50}}{L \cdot \pi r^2}$$

$$CS_m B_x \tau = \frac{r \cdot V_{t50}}{L \cdot r^2}$$

Das spezifische magnetische Moment $S_m$ ergibt sich hieraus zu:

$$S_m = \frac{V_{t50}}{C\pi r L B_x \tau} = \frac{V_{t50} \, 18\eta}{C\pi r L B_x \rho d^2}$$

Das Aerosol mit den ferromagnetischen Teilchen kann vor der Passage durch den Klassifzierer durch eine Magnetisierungseinrichtung geführt werden. Der Magnetisierer ist als Einheit aufgebaut, bei der mit Hilfe von zwei CoSm Permanentmagneten ein homogenes Magnetfeld bzw. eine magn. Flußdichte B erzeugt wird. Jeder der Permanentmagnete hat zylindrische Form mit 4 cm Durchmesser und 2,5 cm Länge. Die Permanentmagnete werden koaxial so hintereinander angeordnet, daß entgegengesetzte Pole gegenüberstehen. Hierdurch ergibt sich eine positive, additive Überlagerung, so daß zwischen den Polen ein nahezu homogenes Magnetfeld entsteht. Die luftgetragenen Teilchen werden in einem Röhrchen senkrecht zur Feldrichtung durch das Magnetisierungsfeld geführt. In der homogenen Feldkonfiguration wirkt keine Kraft auf die Teilchen, so daß keine Abscheidung bzw. keine Verluste entstehen. Die Stärke des Magnetisierungsfeldes kann durch den Abstand zwischen den Permanentmagneten variiert werden und entspricht bei 4 cm Abstand ca. der Polstärke (180 mT). Die bei uns verwendeten Magnetitteilchen ($Fe_3O_4$) werden dabei bis zur Sättigung magnetisiert.

Mit den folgenden Parametern

| | |
|---|---|
| $\eta$ | $1.82 \cdot 10^{-5}$ Pa*s |
| C | 1 |
| r | 1 mm = $10^{-3}$ m |
| L | 6 cm = 0.06 m |
| $B_x$ | 15 Tesla/m |
| $\rho$ | 4900 kg/m$^3$ |
| d | 1.2 µm = $1.2 \cdot 10^{-6}$ m |
| $V_{t,50}$ | 0.37 cm$^3$/s |

ergibt sich für das spezifische magnetische Moment:

$$S_m = 6,09 \, \frac{Am^2}{kg}$$

Eine Filterprobe mit den Teilchen wurde mit dem SQUID-System als Referenz gemessen zu

$$S_m = 4.12 \, Am^2/kg$$

**Patentansprüche**

1. Vorrichtung zur Bestimmung der magnetischen Eigenschaften von Mikroteilchen, welche in einem Trägermedium durch die Vorrichtung geführt werden, bestehend aus

    a) einer Magnetisierungseinheit (1),
    b) einem magnetischer Teilchenabscheider (2) mit zwei gleichen spiegelsymmetrisch angeordneten Magneten, deren gleiche Pole sich gegenüberstehen,
    c) einem Teilchenzähler (5), zur Erfassung der Teilchenkonzentration im Trägermedium mit und ohne Abscheiderwirkung,
    d) einem Durchflußmesser (3) und,
    d) einer vom Durchflußmesser (3) regelbaren Pumpe (4).

2. Vorrichtung nach Anspruch 1, dadurch gekennzeichnet, daß das Magnetfeld der Magnetisierungseinheit (1) mindestens im Bereich, der vom Trägermedium durchströmt wird senkrecht zur Strömungsrichtung homogen ist.

3. Vorrichtung nach einem der Ansprüche 1 bis 2, dadurch gekennzeichnet, daß Teilchenabscheider (2) und Magnetisierungseinheit (1) aus Permanentmagneten bestehen.

4. Vorrichtung nach einem der Ansprüche 1 bis 3, dadurch gekennzeichnet, daß der Feldgradient im Teilchenabscheider (2) mindestens 10 Tesla/m beträgt.

5. Vorrichtung nach einem der Ansprüche 2 bis 4, dadurch gekennzeichnet, daß das Magnetfeld in der Magnetisiereinheit (1) so groß ist, daß die Sättigungsmagnetisierung erreicht wird.

6. Vorrichtung nach einem der Ansprüche 1 bis 5 dadurch gekennzeichnet, daß das Trägermedium in einer Röhre aus elektrisch leitendem, nicht ferromagnetischem Material geleitet wird.

Fig. 1

Fig. 2